# EUROPEAN PATENT APPLICATION

(11) **EP 4 667 298 A1**
(43) Date of publication of application: **24.12.2025**
(21) Application number: 24182478.8
(22) Date of filing: 17.06.2024
(51) Int. Cl.: B60R 25/20, E05B 81/76, E05F 15/40

(54) **METHOD AND DEVICE FOR CONTROLLING A DOOR LOCK DEVICE OF A MOTOR VEHICLE**

(71) Applicant: MINEBEA ACCESSSOLUTIONS ITALIA S.P.A., 10044 Pianezza (IT)
(72) Inventor: PIERI, Alexandre, 10044 Pianezza (IT); PEYNOT, Thomas, 10044 PIANEZZA (IT); CIUFFARELLA, Barbara, 10044 Pianezza (IT)
(74) Representative: Germain Maureau

(57) **Abstract**

The present disclosure relates to a method for controlling a lock mechanism of a motor vehicle door (1), the method comprising: acquiring, by a processing unit of the motor vehicle, pixel data from an event-based sensor (3) embedded in the vehicle; processing, by the processing unit, the pixel data to identify a hand of a user in the pixel data; detecting, by the processing unit, a hand gesture of the hand identified in the pixel data; and controlling the lock mechanism, by the processing unit, as a function of the detected hand gesture.

## Description

### TECHNICAL FIELD

The present invention relates to the field of door lock devices for motor vehicles and more particularly to door lock devices comprising an external handle.

### BACKGROUND

Motor vehicles typically include doors, such as side doors and tailgates. Generally, the lock devices of motor vehicle doors comprise an external handle associated to a door of the vehicle, a lock mechanism for locking the door in a closed position and having a lock state and an unlock state and a control device for actuating the lock mechanism between the lock and unlock states.

Today, the access functions to the motor vehicles include more and more sensors to detect an opening command to trigger unlocking of the vehicle. This opening command usually occurs after user action such as pulling on a handle of a vehicle door. Such sensors are for example an NFC ("Near Field Communication") antenna, capacitive sensors, inductive sensors, strain gauge force sensors, piezo sensors. All this family of sensors always requires the user to be in close proximity of the vehicle to control a door lock mechanism: the NFC detection range is lower than a few centimeters, the capacitive sensor detection range is lower that one centimeter, and strain gauges and piezo sensors require a touch or contact. Other contactless solutions such as those using UWB ("Ultra Wide Band") appear to be easily operable by non-authorized persons and thus raise security issues.

Emerging solutions use cameras for facial recognition to recognize and identify a current user of the vehicle. In one example, a visible field camera integrated into the B-pillar of the vehicle allows user recognition on approach. Upon identification of the user the vehicle is unlocked and other configurable features are set up to the identified user. Such solutions using standard cameras or imagers require complex and powerful computing means to analyze and to filter a huge quantity of data (pixels) in times preserving a good user experience. This makes these solutions costly and cumbersome and therefore difficult to integrate into a vehicle, especially in a vehicle door.

Thus, there is need to control lock mechanism of a vehicle door at a distance between 0,5 m and 2 m.

### SUMMARY

The present disclosure is related to a method for controlling a lock mechanism of a motor vehicle door, the method comprising: acquiring, by a processing unit of the motor vehicle, pixel data from an event-based sensor embedded in the vehicle; processing, by the processing unit, the pixel data to identify a hand of a user in the pixel data; detecting, by the processing unit, a hand gesture of the hand identified in the pixel data; and controlling the lock mechanism, by the processing unit, as a function of the detected hand gesture.

Thanks to these dispositions, the lock state of a vehicle door can be remotely controlled only by gestures e.g. of the user hand, without requiring the user to have a particular device in his hand or pocket. In addition, the use of an event-based sensor enables detection of movements without having a huge amount of pixel data to process.

According to an embodiment, the event-based sensor is integrated into a handle of the vehicle door.

In the handle of the vehicle door, the event-based sensor can have a large field of view, the handle being generally positioned in a convex-shaped part of the vehicle.

According to an embodiment, the event-based sensor is sensitive to light in the near infrared wavelength band.

Thus the event-based sensor is well suited for detecting a user as well as under daylight and night-time conditions.

According to an embodiment, the lock mechanism of the handle is motorized to move the handle between a retracted position in which the handle is flush with an exterior surface of the vehicle door when the vehicle door is locked, and a deployed position in which the handle is protruding from the exterior surface of the door so as to be graspable by a user.

According to an embodiment, the lock mechanism is controlled by the processing unit to set the handle in the retracted position when the processing unit detects a locking movement of the hand of the user, and to set the handle in the deployed position when the processing unit detects an unlocking movement of the hand.

By this choice of hand movements from the sign language, the user can easily memorize which hand movement corresponds to the lock and unlock commands.

According to an embodiment, the method further comprises: simultaneously rotating the event-based sensor about an axis and acquiring, by the processing unit, pixel data from a time-of-flight sensor embedded in the vehicle and from the event-based sensor; processing, by the processing unit, the pixel data from the time-of-flight sensor and from the event-based sensor, to detect objects in a scene observed by the time-of-flight sensor and by the event-based sensor and determine a distance of a nearest of the detected objects from the vehicle; determining if there is a risk of collision between the vehicle door when opened and the nearest detected object; and triggering, by the processing unit, a warning signal directed to the user if the risk of collision is present, and/or controlling, by the processing unit, the lock mechanism to lock the vehicle door.

Thus, the event-based sensor provided for controlling the lock mechanism of the vehicle door is further used to detect a risk of collision of the door with fixed objects when the latter is opened. The time-of-flight sensor has the advantage of being much more compact than a radar and thus can be easily integrated into a handle of a vehicle door.

According to an embodiment, the event-based sensor is sensitive to the light emitted by an emitter unit of the time-of-flight sensor.

Thus, the detection of objects around the vehicle door can be performed even in an unlit environment.

Embodiment may also relate to a system for controlling a lock mechanism of a vehicle door, the system comprising: an event-based sensor embedded in the vehicle, a processing unit connected to the event-based sensor and to the lock mechanism, and configured to implement the method as previously defined.

According to an embodiment, the system further comprises a time-of-flight sensor embedded in the vehicle, the processing unit being connected to the time-of-flight sensor and configured to implement the method as previously defined.

According to an embodiment, the time-of-flight sensor is embedded in the handle of the vehicle door.

According to an embodiment, the event-based sensor is embedded in the handle of the vehicle door.

### BRIEF DESCRIPTION OF THE DRAWINGS

The foregoing and other purposes, features, aspects and advantages of the invention will become apparent from the following detailed description of embodiments, given by way of illustration and not limitation, with reference to the accompanying drawings, in which the same reference refer to similar elements or to elements having similar functions, and in which:
Figure 1 is a schematic front view of a vehicle door, according to an embodiment;
Figure 2 is schematic front view of a handle of the vehicle door, according to an embodiment;
Figure 3 is an exploded perspective view of pieces forming the handle, according to an embodiment;
Figure 4 is a block diagram of a lock control device equipping the vehicle door, according to embodiment;
Figure 5 is a rear view of a vehicle equipped with the lock control device;
Figure 6 is a block diagram of a lock control device equipping the vehicle door, according to another embodiment;
Figure 7 is an exploded perspective view of pieces forming the handle, according to another embodiment;
Figure 8 is a perspective view of the handle, according to another embodiment.

### DETAILED DESCRIPTION

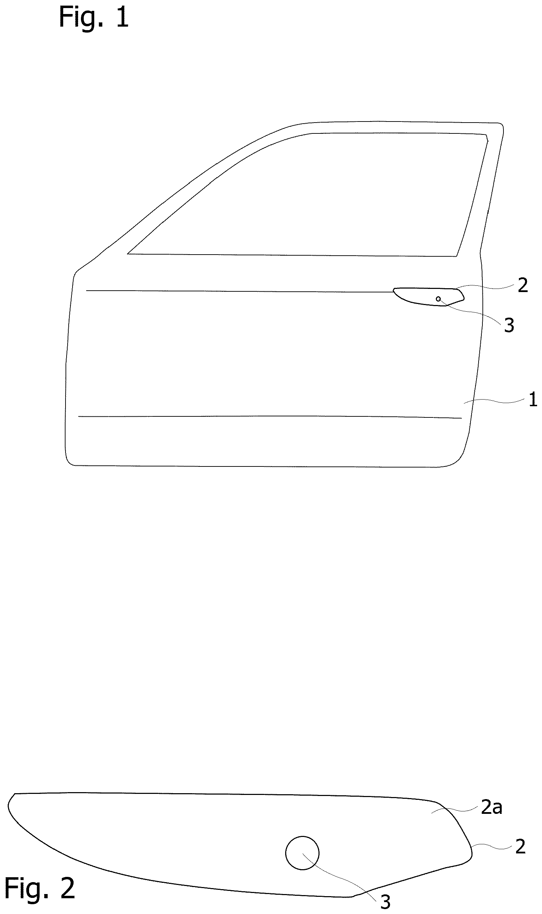

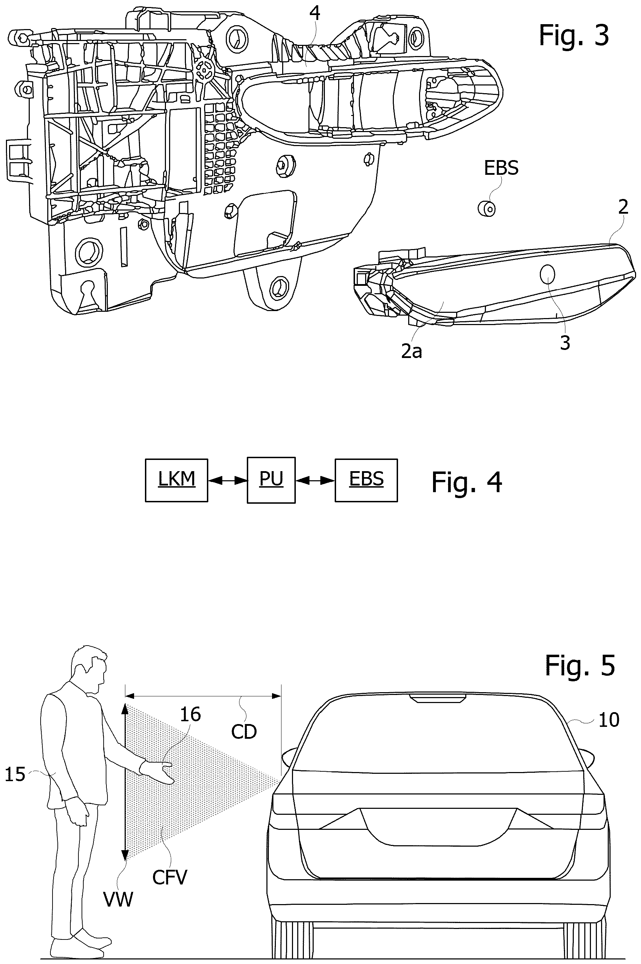

Figure 1 shows a front door 1 of a motor vehicle. The front door 1 comprises a handle 2. Figure 2 shows a front panel 2a of the handle 2. According to an embodiment, the front panel 2a comprises a window 3. Figure 3 shows the front panel 2a and a handle structure 4 of the handle 2 installed in the vehicle door 1, the front panel 2a being fixed to the handle structure 4.

The handle 2 may be of any type of handle that can integrate an image sensor, such as a wing handle, a rotary or translational flush handle, or a swing, bowl or grip handle. A rotary flush handle has a retracted position when the door 1 is locked and a deployed position when the door is unlocked. In the retracted position, the front panel 2a of the handle 2 is flush with the exterior surface of the door 1. In the deployed position, the handle 2 is protruding from the exterior surface of the door so as to be graspable by a user. The lock mechanism LKM can be configured to move the handle 2 between its retracted and deployed positions.

According to an embodiment, the handle structure 4 houses an event-based sensor or camera EBS having a lens centered on the window 3. As illustrated by figure 4, the sensor EBS is connected to a processing unit PU controlling a door lock mechanism LKM of the vehicle door 1. The window 3 can be closed by a transparent cover made of for example a thermoplastic polymer such as PMMA (PolyMethyl MethAcrylate).

Instead of capturing images at fixed intervals as a conventional image sensor and providing complete matrix with the state of all pixels, the event-based sensor EBS detects changes in the observed scene end and only provides a short train of data related only to pixels submitted to a change. Thus, in the pixel data stream provided by the event-based sensor, the pixels are used as single sensors: a signal related to a pixel of the image of the scene is provided only in case of a specific event such as a movement or a change in brightness of the pixel. Due to the small amount of data provided, the event-based sensor allows for high temporal resolution and low latency.

In addition, the event-based sensors have the advantage of being very compact, e.g. 3 mm x 4 mm.

According to an embodiment, the event-based sensor EBS is sensitive to light in the near infrared wavelength band (e.g. 780 nm to 2500 nm). Thus, the sensor EBS can detect the user even in a dark environment (e.g. during the night or in a dimly lit parking).

In Figure 5, a user 15 stands at a distance CD from the door of the vehicle 10 and puts a hand 16 in a field CFV observed by the sensor EBS. At the distance CD, the viewed field CFV has a width VW. The maximum value of the distance CD can be 5 m, depending on the optic quality of the sensor EBS.

According to an embodiment, the processing unit PU is configured to analyze the pixel data provided by the sensor EBS to detect movements of a user and recognize gestures. The processing unit PU is further configured to control the door lock mechanism LKM of the vehicle door 1 as a function of the detected gestures of the user.

According to an example, the processing unit PU is configured to trigger locking of the lock mechanism upon detection of a locking movement of the hand of the user in sign language, i.e. a rotation movement of the hand around an arm axis, the fist being clenched. The processing unit PU is configured to trigger unlocking of the lock mechanism upon detection of a "come on" sign in sign language, i.e. a back and forth movement of the hand fingers, the hand palm facing up.

It could be observed that the integration of the event-based sensor EBS into the door handle 2 has the advantage of being placed in a generally convex-shaped location of the vehicle, thus providing a large field of view to the sensor. However, the event-based sensor can be integrated into the vehicle in any other place such as in a lateral exterior rear-view mirror or in the B-pillars (along the rear edges of the front doors) of the vehicle.

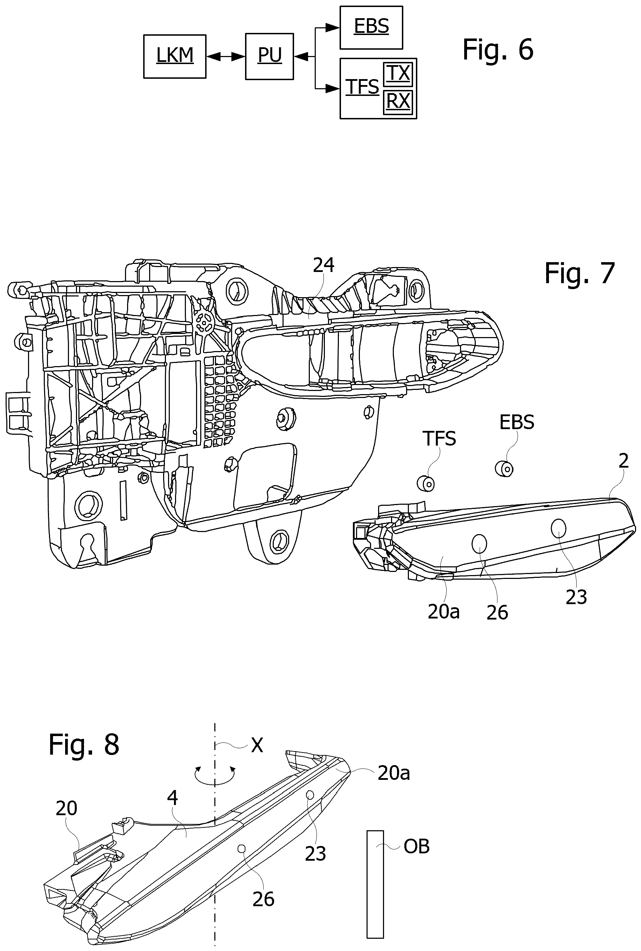

According to another embodiment illustrated by Figures 6, 7 and 8, a handle structure 24 houses the event-based sensor or camera EBS having a lens centered on the window 23 formed in a front panel 20a of the handle 20 and a time-of-flight sensor TFS having a lens centered on a window 26 in the front panel 20a of the handle 20. As illustrated by figure 6, the sensor EBS is connected to a processing unit PU controlling a door lock mechanism LKM of the vehicle door 1. The event-based sensor EBS and the time-of-flight sensor TFS are connected to the processing unit PU. The sensor TFS comprises an emitter unit TX for illuminating the scene observed by the sensor, a receiver unit RX for receiving the light transmitted by the emitter unit and reflected by objects of the scene observed by the sensor TFS and is configured to measure the time between the instant of emission of the light by the emitter unit and the instant of reception of the light by the receiver unit.

The processing unit PU is configured to control the door lock mechanism LKM to rotate a door handle 20, e.g. about a rotation axis X, and to analyze and correlate pixel data provided by the sensors EBS and TFS, to detect objects that can be hit by the vehicle door 1 when opened. When the handle 20 moves, the fixed objects of the scene observed by the event-based sensor EBS are seen moving by the sensor EBS and therefore the pixel data provided by the event-based sensor EBS enable the processing unit PU to generate an image of fixed objects in the scene around the vehicle door as observed by the sensor. The data provided by the time-of-flight sensor TFS enable to estimate a distance of the nearest object OB in the scene observed by the sensor. The processing unit HP is configured to trigger a warning signal when the nearest detected object in the scene is at a distance from the sensors EBS, TFS lower than a distance threshold. The distance threshold is defined such that the vehicle door 1 can be opened without any risk that it hits the detected nearest object. The warning signal can be a sound and/or a light. In addition, the lock mechanism LKM can be controlled to lock the door 1 if any door opening can hit the detected nearest object and damage the vehicle or create an incident.

The detection of an obstacle in the space needed to open the vehicle door can be activated only when the vehicle is stopped.

According to an example, the rotation axis X is vertical.

According to an embodiment, the event-based sensor EBS is sensitive to the light emitted by the emitter unit TX of the -of-flight sensor TFS.

The above description of various embodiments is provided for purpose of description to one of ordinary skills in the related art. It is not intended to be exhaustive or to limit the scope of the present disclosure solely to the disclosed embodiments. Numerous alternatives or variations to the present disclosure will be apparent to those of ordinary skills in the related art. Accordingly, while some alternatives or embodiments have been presented specifically, other embodiments will be apparent or easily developed by those of ordinary skills in the related art. Limitations in the appended claims should be interpreted broadly based on the language used in the claims and such limitations should not be restricted to the specific examples described above.

In this respect, it is apparent to those of ordinary skills in the related art that the event-based sensor EBS is not necessarily integrated into the handle 2 to control the lock mechanism LKM as a function of hand movements of a user. Also, the time-of-flight sensor TFS is not necessarily integrated into the handle 20.

To be rotated to acquire pixel data of fixed objects around the vehicle door, the event-based sensor EBS is not necessarily integrated into the handle 2, but it can also be associated with a dedicated motorization or integrated into a motorized rotating part of the vehicle such as a lateral exterior rear-view mirror.

In addition, the time-of-flight sensor TFS is not necessarily integrated into the handle 2 or rotated with the event-based sensor EBS. It can have a large field of view covering all the field of view covered by the event-based sensor when rotated.

## Claims

1. A method for controlling a lock mechanism (LKM) of a motor vehicle door (1), the method comprising:
acquiring, by a processing unit (PU) of the motor vehicle, pixel data from an event-based sensor (EBS) embedded in the vehicle;
processing, by the processing unit, the pixel data to identify a hand (16) of a user (15) in the pixel data;
detecting, by the processing unit, a hand gesture of the hand identified in the pixel data; and
controlling the lock mechanism, by the processing unit, as a function of the detected hand gesture.

2. The method of claim 1, wherein the event-based sensor (EBS) is integrated into a handle (2, 20) of the vehicle door (1).

3. The method according to claim 1 or 2, wherein the event-based sensor (EBS) is sensitive to light in the near infrared wavelength band.

4. The method according to one of claims 1 to 3, wherein the lock mechanism (LKM) of the handle (2, 20) is motorized to move the handle between a retracted position in which the handle is flush with an exterior surface of the vehicle door (1) when the vehicle door is locked, and a deployed position in which the handle is protruding from the exterior surface of the door so as to be graspable by a user.

5. The method according to claim 4, wherein the lock mechanism (LKM) is controlled by the processing unit (PU) to set the handle (2, 20) in the retracted position when the processing unit detects a locking movement of the hand (16) of the user (15), and to set the handle in the deployed position when the processing unit detects an unlocking movement of the hand.

6. The method according to one of claims 1 to 5, further comprising:
simultaneously rotating the event-based sensor (EBS) about an axis (RX) and acquiring, by the processing unit (PU), pixel data from a time-of-flight sensor (TFS) embedded in the vehicle and from the event-based sensor (EBS);
processing, by the processing unit, the pixel data from the time-of-flight sensor and from the event-based sensor, to detect objects (OB) in a scene observed by the time-of-flight sensor and by the event-based sensor and determine a distance of a nearest of the detected objects from the vehicle;
determining if there is a risk of collision between the vehicle door (1) when opened and the nearest detected object (OB); and
triggering, by the processing unit, a warning signal directed to the user if the risk of collision is present, and/or controlling, by the processing unit, the lock mechanism to lock the vehicle door.

7. The method according to claim 6, wherein the event-based sensor (EBS) is sensitive to the light emitted by an emitter unit (TX) of the time-of-flight sensor (TFS).

8. A system for controlling a lock mechanism of a vehicle door, the system comprising:
an event-based sensor (EBS) embedded in the vehicle,
a processing unit (PU) connected to the event-based sensor and to the lock mechanism (LKM), and configured to implement the method of one of claims 1 to 5.

9. The system of claim 8, further comprising a time-of-flight sensor (TFS) embedded in the vehicle, the processing unit being connected to the time-of-flight sensor and configured to implement the method of one of claims 6 and 7.

10. The system according to claim 8 or 9, wherein the time-of-flight sensor (TFS) is embedded in the handle (20) of the vehicle door (1).

11. The system according to claim 8 to 10, wherein the event-based sensor (EBS) is embedded in the handle (20) of the vehicle door (1).
